# EUROPEAN PATENT APPLICATION

(11) **EP 1 405 787 A2**
(43) Date of publication of application: **07.04.2004**
(21) Application number: 03384203.0
(22) Date of filing: 03.09.2003
(51) Int. Cl.: B64C 23/00

(54) **Lifting arrangement for aircraft fuselage**

(30) Priority: 12.09.2002 ES 200202089
(71) Applicant: Munoz Saiz, Manuel, 04004 Almeria (ES)
(72) Inventor: Munoz Saiz, Manuel, 04004 Almeria (ES)

(57) **Abstract**

A lifting arrangement for aircraft fuselages that consists of placing longitudinal vertical or slanted fins or plates on the lower and lateral lower part of the whole fuselage, said fins form a channel with the underside of the fuselage, including nose, fuselage and tail, open on their lower area and also add longitudinal horizontal or laterally slanted fins on the lateral middle or middle-to-low area of the fuselage and with a slight sloping up on the nose, said fins are arranged in such a way that the upper fins are more projected laterally, and because of this arrangement and their sloping up on the nose direct the air flow downward and backward.

## Description

### FIELD OF THE INVENTION.

Aircraft fuselages.

### STATE OF THE ART.

This is a continuation in part of the Spanish patents P960104, of Sept. 6, 1996, P9707753 of Aug. 7, 1997 and P9902785 of Dec. 20, 1999 and P9902646 of Dec. 1, 999 to aircraft improvement. At the present time, the underside of aircraft is not being used, or is only partially used to produce lifting, and thus the wings and flaps are necessary.

### DESCRIPTION OF THE INVENTION.

The lifting arrangement for aircraft fuselages consists of placing longitudinal vertical or slanted fins or plates on the lower and lateral lower part of the whole fuselage, including nose and tail, thus avoiding the lateral slip of the airflow that presses on the underside of the fuselage when it advances with a certain angle of positive attack, producing a strong lift. The fins form big channels with the underside of the fuselage, open on their lower area.

Also, longitudinal horizontal or laterally slanted fins can be added on the lateral middle or middle-to-low area of the fuselage and with a slight sloping up on the nose, in order to increase the lift particularly at low speed, in such a way that on increasing the angle of attack the lift produced is such that, in addition to the wings, the flaps can be eliminated. Said fins can be slanted or turned laterally, and are arranged in such a way that the upper fins are more projected laterally, and because of this arrangement and their sloping up on the nose, direct the air flow backward and downward, producing complementary lift.

At cruising speed or high speed, a small angle of attack of the fuselage is sufficient in order to produce the lift of the wings or part of them.

The fins or plates can be flat or curved around an axis approximately parallel to the longitudinal axis of the fuselage, that is, with the convexity towards the exterior. This curvature reduces the impact of the lateral wind.

The fins, although generally fixed, can be turnable or retractile in order to reduce the friction.

The lower surface of the fuselage can be flat or shaped in a circular or elliptical arc cross section, although preferably it will be flat.

The upper surface of the fuselage can be flat, although preferably it will be shaped in a circular or elliptical arc cross-section.

The lateral surfaces of the fuselage can be curved or flat in cross-section.

That is, elongated fuselages with the following shapes or constant cross-sections can be used: circular, semicircular with flat lateral walls, oval, circular segment, oval segment or rectangular with rounded sides, and mainly narrowered or flattened vertically.

The vertically flattened fuselages are less affected by side winds.

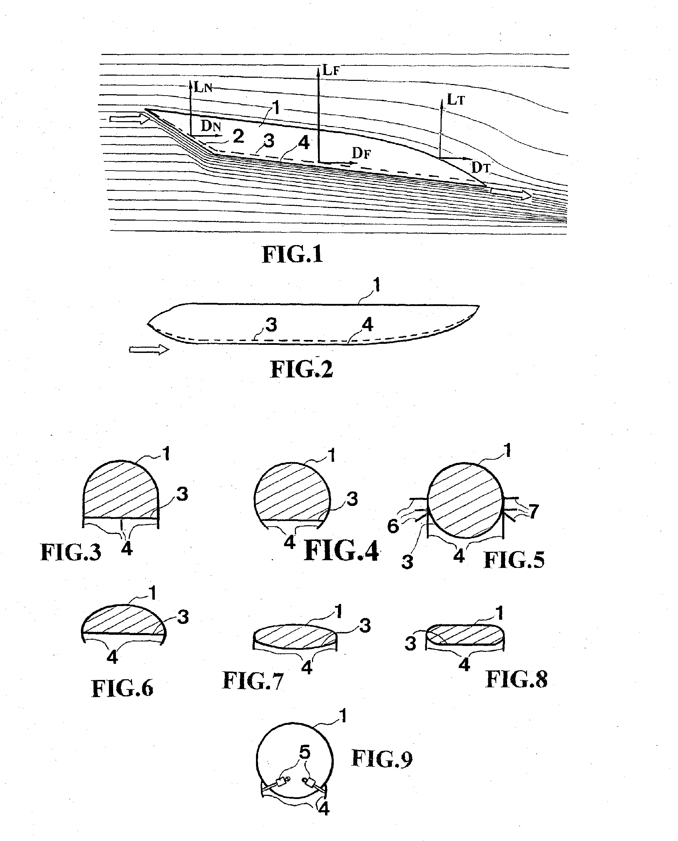

The fuselage can be generally of the sloped nose and tail kind, according to figure 1. The upper forward and rear areas will preferably be aerodynamically curved, profiled or streamlined. This is the only aircraft where the nose, fuselage and tail produce the whole lift.

The fins can be added to current conventional fuselages in order to obtain this benefit, without the need for making major changes, their lower fins can have also a slight sloping up.

The area of the fuselage between the nose and the tail can have a thickness widening from a lesser to greater degree towards the rear, in such a way that at cruising speed, when the lower surface forms a certain positive angle with the horizontal, the upper side will be completely horizontal, thus avoiding or delaying the separation of the boundary layer.

The fuselage may be slightly curved lengthwise with its underside concave.

The main landing gear may be displaced backward.

Small thin wings, stabilizing fins or a big conventional stabilizer, which do not produce lift, are only necessary to provide complementary lift

The total drag to forward movement is much lower than that of aircraft with wings.

Drawings do not show the engines, wings and control fins.

Advantages: It has strong lift, with the possibility of eliminating the flaps and the wings completely. The aircraft accelerates quicker during takeoff, on account of not using flaps; the major lift will come about during rotation, for which reason the runway required will be much shorter. It weighs less or can carry more payload. It is simpler and more economical. It has a lower total drag. It is useful for all fuselages. The lift is produced by the whole underside of the aircraft.

### BRIEF DESCRIPTION OF THE DRAWINGS

Figure 1 shows a schematic lateral view of one of the fuselages in the invention with the longitudinal fins or plates on its lateral lower part.
Figure 2 shows a schematic lateral view of a current fuselage with the longitudinal fins in the invention.
Figure 3 to 9 show schematic cross-section views of different fuselages and their fins.

### MORE DETAIL DESCRIPTION OF THE DRAWINGS

Figure 1 shows the upper surface of the fuselage (1), the longitudinal fins on the lateral lower part of the nose (2), the underside of the fuselage (3), and the longitudinal fins or plates on the lower and lateral lower part of the fuselage (4). The streamlines flow and arrows show the downward displacement of the airflow and as a result the forces generated on the fuselage. The nose lift force LN, its drag DN, the lift of the underside of the fuselage LF and its drag DF, and the tail lift force LT and its drag DT.

Figure 2 shows the upper zone or surface of a conventional fuselage (1), the underside of the fuselage (3) and the longitudinal fins on the lateral lower part of the fuselage (4).

Figure 3 shows the upper zone or surface of a fuselage of semicircular cross-section (1) using flat lateral walls, the underside of the fuselage (3) and the longitudinal flat fins on the lower and lateral lower part of the fuselage (4), said fins form big channels with the underside of the fuselage, open on their lower area.

Figure 4 shows the upper zone or surface of a fuselage of circular segment cross-section (1), the underside of the fuselage (3) and the longitudinal curved fins on the lateral lower part of the fuselage (4), with the upper fins more projected laterally.

Figure 5 shows the upper zone or surface of a fuselage of circular cross-section (1), the underside of the fuselage (3), the longitudinal flat fins on the lateral lower part of the fuselage (4), the longitudinal horizontal or laterally slanted fins (6 and 7) added on the lateral middle or middle-to-low area of the fuselage and with a slight sloping up on the nose, said fins can be slanted or turned laterally.

Figure 6 shows the upper zone or surface of a oval segment cross-section fuselage (1), the underside of the fuselage (3) and the longitudinal curved fins on the lateral lower part of the fuselage (4).

Figure 7 shows the upper zone or surface of an oval and flattened cross-section fuselage (1), the underside of the fuselage (3) and the longitudinal flat fins on the lateral lower part of the fuselage (4).

Figure 8 shows the upper zone or surface or a fuselage (1) whose cross-section is rectangular with rounded sides, the underside of the fuselage (3) and the longitudinal fins on the lateral lower part of the fuselage (4).

Figure 9 shows the upper zone or surface of a fuselage (1) the longitudinal fins on the lateral lower part of the fuselage (4), and the rams (5) that act the fins.

## Claims

1. A lifting arrangement for aircraft fuselages that consists of placing longitudinal vertical or slanted fins or plates on the lower and lateral lower part of the whole fuselage, said fins form a channel with the underside of the fuselage, including nose, fuselage and tail, open on their lower area and also add longitudinal horizontal or laterally slanted fins on the lateral middle or middle-to-low area of the fuselage and with a slight sloping up on the nose, said fins are arranged in such a way that the upper fins are more projected laterally, and because of this arrangement and their sloping up on the nose direct the air flow downward and backward.

2. A lifting arrangement for aircraft fuselages according to claim 1, wherein the fins or plates are curved around an axis approximately parallel to the longitudinal axis of the fuselage, with the convexity towards the exterior

3. A lifting arrangement for aircraft fuselages according to claim 1, wherein the fins or plates are flat.

4. A lifting arrangement for aircraft fuselages according to claim 1, wherein the fins are retractile and acted by a ram.

5. A lifting arrangement for aircraft fuselages according to claim 1, wherein the fuselages of the elongated kind have a constant circular cross-section.

6. A lifting arrangement for aircraft fuselages according to claim 1, wherein the fuselage of the elongated kind is shaped in a constant semicircular cross-section with flat lateral walls.

7. A lifting arrangement for aircraft fuselages according to claim 1, wherein the fuselage of the elongated kind has a constant oval cross-section.

8. A lifting arrangement for aircraft fuselages according to claim 1, wherein the lower surface of the fuselage is flat.

9. A lifting arrangement for aircraft fuselages according to claim 1, wherein the lateral fins are fixed.

10. A lifting arrangement for aircraft fuselages according to claim 1, wherein the area of the fuselage between the nose and the tail has a thickness widening from a lesser to greater degree towards the rear, in such a way that at cruising speed, when the lower surface forms a certain positive angle with the horizontal, the upper side will be completely horizontal, thus avoiding or delaying the separation of the boundary layer.

11. A lifting arrangement for aircraft fuselages according to claim 1, wherein the upper surface of the fuselage has an elliptic arc cross-section.

12. A lifting arrangement for aircraft fuselages according to claim 1, wherein the longitudinal lower side fins are vertical.

13. A lifting arrangement for aircraft fuselages according to claim 1, wherein the longitudinal fins on the lateral middle or middle-to-low area of the fuselage and with a slight sloping up on the nose are horizontal laterally.

14. A lifting arrangement for aircraft fuselages according to claim 1, wherein the fins are laterally slanted.

15. A lifting arrangement for aircraft fuselages according to claim 1, wherein the fins can be slanted or turned laterally

16. A lifting arrangement for aircraft fuselages according to claim 1, wherein the fuselage has its nose and tail slanted, according to figure 1.

17. A lifting arrangement for aircraft fuselages according to claim 1, wherein the fuselage is slightly curved lenghtwise with its underside concave.
